# EUROPEAN PATENT APPLICATION

(11) **EP 2 857 133 A1**
(43) Date of publication of application: **08.04.2015**
(21) Application number: 12877721.6
(22) Date of filing: 29.05.2012
(51) Int. Cl.: B23F 9/08

(54) **MULTI-USE, LARGE-MODULE GEAR MILLING MACHINE**

(71) Applicant: Beijing Buffalo Transmission Technology Co., Ltd., Beijing 100081 (CN); Tianjin Buffalo Transmission Technology Co., Ltd., Tianjin 300350 (CN)
(72) Inventor: WANG, Xiaochun, Beijing 100044 (CN)
(74) Representative: Troesch Scheidegger Werner AG
(86) International application number: PCT/CN2012/076227
(87) International publication number: WO 2013/177754

(57) **Abstract**

Disclosed is a multi-function, large-scale gear milling machine, at least comprising: a milling machine body; a workbench fixedly connected to the milling machine body and arranged along the milling machine body; a flat rotary table for clamping a disc-shaped gear, wherein the flat rotary table is eccentrically embedded in the workbench and the surface of the flat rotary table is basically of equal height to the workbench; an vertical rotary table provided at one end of the workbench, a centre frame or tailstock being provided at the other end of the workbench, wherein the centre frame or tailstock has the same axis as the vertical rotary table, and the vertical rotary table cooperates with the centre frame or tailstock to clamp a shaft gear; and a fork-shaped cutter head for mounting a disc-shaped milling cutter, wherein the fork-shaped cutter head is provided on a moving base such that the fork-shaped cutter head can move in three translational degrees of freedom relative to a workpiece and an included angle between an axis of a cutting tool and an axis of the workpiece can be adjusted accordingly, the moving base being connected to the milling machine body.

## Description

### Field of the Invention

The present invention relates to a machine tool for the manufacture of large-scale and coarse-module industrial gears, particularly, to a metal cutting machine for large-scale cylindrical gears, large-scale spiral bevel gears, spur bevel gears and skew bevel gears, which is adaptive to both rough machining and finish machining after heat treatment, and more particularly, to a multi-use, large-scale gear milling machine.

### Background of the Invention

Currently, the machining methods of the industrial cylindrical gears mainly include gear hobbing, gear shaping and gear grinding, which are performed on gear hobbing machine, gear shaping machine and form-wheel gear grinder, respectively.

Those methods have the following problems: as for coarse-pitch gears, for example gears with modules larger than 25 and particularly, gears having large helix angles, the machining efficiency is not good enough when the conventional gear hobbing method is used, while the efficiency of gear shaping is even lower. Obvious vibration may be caused when a gear with large helical angle coarse pitch is hobbed, so that several times of tool paths have to be adopted and the cutting depth is gradually increased to get required tooth depth. A large-scale hob is expensive, for each module at least a hob should be ordered, and the ordering cycle is long. The hob and the shaper cutter usually cannot be repaired even if only one tooth in the cutter is broken. The grinding wheel for gear grinding needs to be dressed in accordance with special profile of each type of workpiece, and during the single and small-batch production of industrial gears, the dressing loss of the grinding wheel may be far more than the grinding wheel sharpening loss in gear grinding, thus the production cost is increased and the production preparation cycle is prolonged. The initial investment in equipments is high, and the applicable scope is limited. The machine tool for the machining of cylindrical gears cannot be used to machine spiral bevel gears or spur bevel gears, and the machine tool for the machining of disc-type gears usually cannot be used to machine a gear with a long shaft.

In order to reduce the production cost and the initial investment and improve the machining efficiency for single and small-batch production of the large-scale industrial gears, the present invention proposes a multi-function large-scale gear milling machine.

### Summary of the Invention

The objective of the present invention is to provide a multi-function, large-scale and course-pitch gear milling machine, which can complete rough and the finish machining after heat treatment of many types of large-scale gears on the same machine tool, including large-scale cylindrical spur and helical gears, large-scale spiral bevel gears, spur bevel gears, skew bevel gears and enveloping worm pairs, so as to machine various large-scale industrial gears in a high efficiency at lower cost.

In order to achieve the above objective, the technical solution of the present invention is a multi-function, large-scale gear milling machine, at least comprising: a milling machine body; a workbench fixedly connected to the milling machine body and arranged along the milling machine body; a flat rotary table for clamping disc-type gears, wherein the flat rotary table is eccentrically embedded in the workbench with the surface of the flat rotary table is basically of equal height to the workbench; an vertical rotary table provided at one end of the workbench, a centre frame or tailstock being provided at the other end of the workbench, wherein the centre frame or tailstock has the same axis as the vertical rotary table, and the vertical rotary table cooperates with the centre frame or tailstock to clamp a shaft gear; and a fork-shaped cutter head for mounting a disc-type milling cutter, wherein the fork-shaped cutter head is provided on a moving base such that the fork-shaped cutter head can move in three translational degrees of freedom relative to the workpiece and an angle between an axis of a cutter and an axis of the workpiece can be adjusted accordingly, the moving base is connected to the milling machine body.

The multi-function, large-scale gear milling machine of the present invention has the following characteristics and advantages:
1. The flat rotary table can clamp the disc-type gears, and the vertical rotary table can cooperate with the centre frame or tailstock to clamp the shaft gears; the disc-type milling cutter is mounted in the fork-shaped cutter head, and it moves and swings along with the fork-shaped cutter head; when the fork-shaped cutter head swings, the included angle between the axis of a cutting tool and the axis of the workpiece can be adjusted accordingly. Thus, in the embodiment of the present invention, the rough machining and the finish machining after heat treatment of many types of large-scale gears can be completed on the same machine tool, so as to machine various large-scale industrial gears in high efficiency at lower cost.
2. When the milling machine is used to machine large-scale industrial gears, the initial investment is small, the machining efficiency is high, the cost of the cutting tool is low, the cutting tool is well universal and the setup period is short.

### Brief Description of the Drawings

In order to describe the technical solutions of the embodiments of the present invention more clearly, the drawings to be used in the descriptions of the embodiments are briefly introduced as follows. It is obvious that the following drawings just illustrate some of the embodiments of the present invention. A person skilled in the art can obtain other drawings from those drawings without paying any creative effort.
Fig. 1 is a structural diagram of a multi-function, large-scale gear milling machine in a first embodiment of the present invention;
Fig. 2 is a structural diagram of a multi-function, large-scale gear milling machine in a second embodiment of the present invention, which illustrates a state where a ram is not extended; and
Fig. 3 is a structural diagram of a multi-function, large-scale gear milling machine in a second embodiment of the present invention, which illustrates a state where the ram is extended.

### Detailed Description of the Preferred Embodiments

The technical solutions of the embodiments of the present invention will be clearly and completely described as follows with reference to the drawings for the embodiments of the present invention. It is obvious that the described embodiments are just a part of the embodiment of the present invention rather than all of them. Based on the embodiments of the present invention, any other embodiment obtained by a person skilled in the art without paying a creative effort shall fall within the protection scope of the present invention.

### Embodiment 1

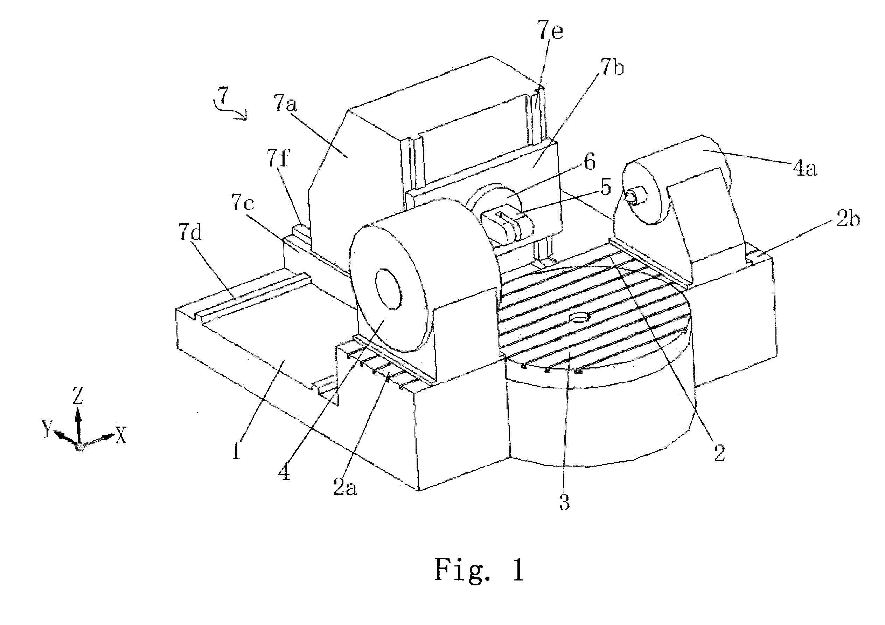

As illustrated in Figs. 1 to 3, the embodiment of the present invention provides a multi-function, large-scale gear milling machine, at least comprising: a milling machine body 1, a workbench 2, a flat rotary table 3, a vertical rotary table 4 and a fork-shaped cutter head 5. The workbench 2 is fixedly connected to the milling machine body 1 and arranged along the milling machine body 1. The flat rotary table 3 is configured to clamp a disc-shaped gear and is eccentrically embedded in the workbench 2, a surface of the flat rotary table 3 being basically of equal height to the workbench 2. The vertical rotary table 4 is provided at one end of the workbench 2, and a centre frame or tailstock 4a is provided at the other end of the workbench 2, wherein the centre frame or tailstock 4a has the same axis as the vertical rotary table 4, and the vertical rotary table 4 cooperates with the centre frame or tailstock 4a to clamp a shaft gear. The fork-shaped cutter head 5 is configured to mount a disc-type milling cutter, wherein the fork-shaped cutter head 5 is provided on a moving base such that the fork-shaped cutter head can move in three translational degrees of freedom relative to a workpiece and the included angle between the axis of the cutting tool and the axis of the workpiece can be adjusted accordingly, the moving base being connected to the milling machine body 1.

Specifically, the surface of the workbench 2 is divided into a left surface 2a and a right surface 2b by the flat rotary table 3 embedded therein, wherein the left surface 2a and the right surface 2b are left and right parts of the same workbench 2. Herein, the vertical rotary table 4 is provided on the left surface 2a, and the centre frame or tailstock 4a is provided on the right surface 2b correspondingly. When the shaft gear is to be machined, the shaft gear is clamped between the vertical rotary table 4 and the centre frame or tailstock 4a, and the disc-shaped milling cutter is adjusted to correspond to a portion of the shaft gear to be machined.

In the embodiment of the present invention, the flat rotary table 3 can clamp the disc-shaped gear; the vertical rotary table 4 can cooperate with the centre frame or tailstock 4a to clamp the shaft gear; the disc-shaped milling cutter is mounted in the fork-shaped cutter head 5, and is able to move and swing along with the fork-shaped cutter head 5; when the fork-shaped cutter head 5 swings, the included angle between the axis of the cutting tool (i.e., the axis of the disc-shaped milling cutter) and the axis of the workpiece (i.e., the axis of the gear) can be adjusted accordingly. Thus, in the embodiment of the present invention, the rough machining and the finish machining after heat treatment of many types of large-scale gears can be completed on the same machine tool, including large-scale cylindrical spur gear and helix gear, large-scale spiral bevel gear, spur bevel gear, skew bevel gear and enveloping worm gear pair, so as to machine various large-scale industrial gears in high efficiency at lower cost.

According to an embodiment of the present invention, the moving base comprises a swinging base 6. The fork-shaped cutter head 5 is fixed on the swinging base 6 to swing along therewith. And the disc-shaped milling cutter is provided in the fork-shaped cutter head 5. In this embodiment, the fork-shaped cutter head 5 may swing for no less than 360° along with the swinging base 6.

The moving base further comprises a moving mechanism 7 which is able to drive the fork-shaped cutter head to translate in three translational degrees of freedom. The swinging base 6 is connected to the moving mechanism 7, so that the swinging base 6 and the fork-shaped cutter head 5 can translate in three translational degrees of freedom along with the moving mechanism 7.

As illustrated in Fig. 1, the moving mechanism 7 comprises a column 7a, a carriage 7b, a sliding base 7c and a pair of longitudinal guide rails 7d. One side of the column 7a facing the workbench 2 is provided with a pair of vertical guide rails 7e. The carriage 7b is vertically slidably connected to the vertical guide rails 7e. The swinging base 6 is provided on the carriage 7b and is able to swing relative to the carriage 7b. The upper surface of the sliding base 7c is provided with a pair of transverse guide rails 7f, to which the column 7a is transversely slidably connected. The longitudinal guide rails 7d are provided on the milling machine body 1, and the sliding base 7c is longitudinally slidably connected to the longitudinal guide rails 7d.

In this embodiment, the swinging base 6 is provided on the carriage 7b, which may drive the swinging base 6 to slide vertically up and down along the vertical guide rails 7e (i.e., sliding in direction Z of the coordinates). The column 7a may drive the carriage 7b and the swinging base 6 to slide transversely along the transverse guide rails 7f (i.e., sliding in direction Y of the coordinates). The sliding base 7c may drive the column 7a, the carriage 7b and the swinging base 6 to slide longitudinally along the longitudinal guide rails 7d (i.e., sliding in direction X of the coordinates). Thus, the swinging base 6 and the fork-shaped cutter head 5 connected thereto may slide in directions X, Y and Z of the coordinates. In addition, the swinging base 6 and the fork-shaped cutter head 5 may swing for not less than 360° on the carriage 7b, such that the disc-shaped milling cutter in the fork-shaped cutter head 5 may well and conveniently machine the workpiece.

One side of the workbench 2 close to the fork-shaped cutter head 5 is substantially tangential to the flat rotary table 3, so as to utilize the transverse travel of the column 7a more efficiently, and reduce the extending length of the fork-shaped cutter head 5.

As illustrated in Fig. 1, the fork-shaped cutter head 5 includes two walls having different thicknesses, and the disc-shaped milling cutter is disposed between the two walls. The wall having a larger thickness contains a driving mechanism and a bearing supporting the cutting tool therein, and the wall having a smaller thickness only contains a bearing supporting the cutting tool therein. Herein, the fork-shaped cutter head 5 has a left wall and a right wall thicker than the left wall.

A swinging shaft of the fork-shaped cutter head 5 may be provided with a clamping mechanism (not illustrated), which may clamp the swinging shaft of the fork-shaped cutter head 5 when the cylindrical spur gear and helix gear or some types of worm gear pairs are machined, so as to improve the rigidity of the cutter head and the cutting condition.

The flat rotary table 3 and the vertical rotary table 4 may also be provided with a clamping mechanism, respectively (not illustrated). The clamping mechanism may clamp the rotary table when the cylindrical spur gear and some types of worm gear pairs are roughly machined, so as to improve the rigidity of the cutter head and the cutting condition.

The structure of the clamping mechanism is well known to a person skilled in the art, and it is not described in details herein.

### Embodiment 2

The structure of this embodiment is substantially the same as that of Embodiment 1, and the distinction only lies in that the moving mechanism 8 of this embodiment is different from the moving mechanism 7 in Embodiment 2.

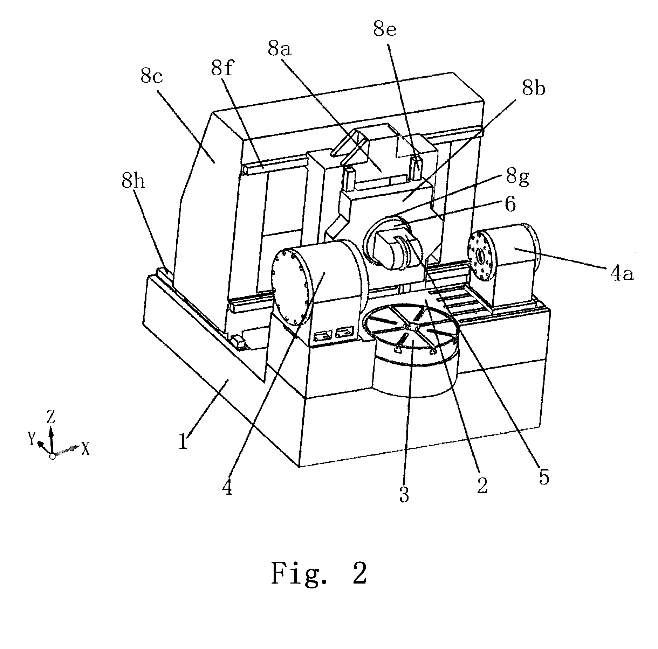

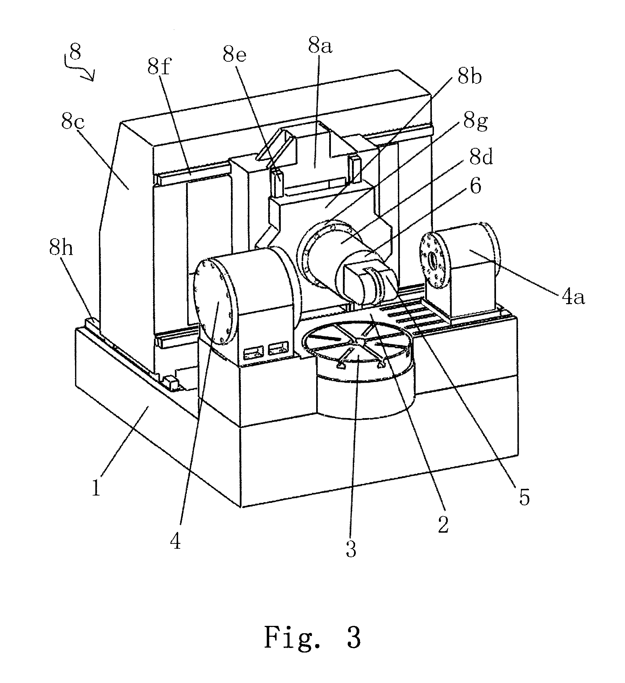

As illustrated in Figs. 2 and 3, the moving mechanism 8 comprises an inner frame 8a, a slide base 8b, an outer frame 8c and a ram 8d. One side of the inner frame 8a facing the workbench 2 is provided with a pair of vertical guide rails 8e, to which the carriage 8b is vertically slidably connected. One side of the outer frame 8c facing the workbench 2 is provided with a pair of longitudinal guide rails 8f, to which the inner frame 8a is longitudinally slidably connected. The ram 8d is transversely slidably provided on a ram base 8g that is connected to the slide base 8b. The swinging base 6 is provided on the ram 8d and can swing relative to the ram.

In this embodiment, the swinging base 6 is provided on the ram 8d, which may drive the swinging base 6 to slide transversely along the ram base 8g on the carriage 8b (i.e., sliding in direction Y of the coordinates). The carriage 8b may drive the ram base 8g, the ram 8d and the swinging base 6 to slide vertically up and down along the vertical guide rails 8e (i.e., sliding in direction Z of the coordinates). And the inner frame 8a may drive the carriage 8b, the ram 8d and the swinging base 6 to slide longitudinally along the longitudinal guide rails 8f (i.e., sliding in direction X of the coordinates). Thus, the swinging base 6 and the fork-shaped cutter head 5 connected thereto may slide in directions X, Y and Z of the coordinates. In addition, the swinging base 6 and the fork-shaped cutter head 5 may swing for not less than 360° on the ram 8d, such that the disc-shaped milling cutter in the fork-shaped cutter head 5 may well and conveniently machine the workpiece.

In addition, the milling machine body 1 is further provided with a transverse guide rail 8h, to which the outer frame 8c is transversely slidably connected.

The moving mechanism 8 of this embodiment uses the frame-in-frame technology, such that the swinging base 6 and the fork-shaped cutter head 5 move in three translational degrees of freedom. But in the frame-in-frame solution, the outer frame 8c is large and heavy, and its transverse movement is difficult. Thus the transverse guide rail 8h may make a rough adjustment of the outer frame 8c transversely, and a further transverse position adjustment may be made through the ram 8d.

One side of the workbench 2 close to the fork-shaped cutter head 5 is substantially tangential to the flat rotary table 3, so as to utilize the transverse travel of the ram 8d more efficiently, and reduce the extending length of the fork-shaped cutter head 5.

Other structures, working principles and beneficial effects of this embodiment are the same as those of Embodiment 1, which are omitted herein.

The above descriptions are just several embodiments of the present invention. According to the disclosure of the application document, a person skilled in the art can make various amendments or modifications to the embodiments of the present invention, without deviating from the spirit and scope of the present invention.

## Claims

1. A multi-function, large-scale gear milling machine, at least comprising:
a milling machine body;
a workbench fixedly connected to the milling machine body and arranged along the milling machine body;
a flat rotary table for clamping a disc-shaped gear, wherein the flat rotary table is eccentrically embedded in the workbench and a surface of the flat rotary table is basically of equal height to the workbench;
a vertical rotary table provided at one end of the workbench, a centre frame or tailstock being provided at the other end of the workbench, wherein the centre frame or tailstock has the same axis as the vertical rotary table, and the vertical rotary table cooperates with the centre frame or tailstock to clamp a shaft gear; and
a fork-shaped cutter head for mounting a disc-shaped milling cutter, wherein the fork-shaped cutter head is provided on a moving base such that the fork-shaped cutter head can move in three translational degrees of freedom relative to a workpiece and an included angle between an axis of a cutting tool and an axis of the workpiece can be adjusted accordingly, the moving base being connected to the milling machine body.

2. The multi-function, large-scale gear milling machine according to claim 1, wherein the moving base comprises a swinging base; the fork-shaped cutter head is fixed on the swinging base so as to swing therewith; and the disc-shaped milling cutter is provided in the fork-shaped cutter head.

3. The multi-function, large-scale gear milling machine according to claim 2, wherein the moving base further comprises a moving mechanism which is able to drive the fork-shaped cutter head to translate in three translational degrees of freedom, and the swinging base is connected to the moving mechanism.

4. The multi-function, large-scale gear milling machine according to claim 3, wherein the moving mechanism comprises:
a column, one side thereof facing the workbench being provided with a vertical guide rail(s);
a carriage, which is vertically slidably connected to the vertical guide rail(s), the swinging base being provided on the carriage and being possible to swing relative to the carriage;
a sliding base, an upper surface thereof being provided with a transverse guide rail, to which the column is transversely slidably connected; and
a longitudinal guide rail(s), which is provided on the milling machine body, the sliding base being longitudinally slidably connected to the longitudinal guide rail(s).

5. The multi-function, large-scale gear milling machine according to claim 3, wherein the moving mechanism comprises:
an inner frame, one side thereof facing the workbench being provided with a vertical guide rail(s);
a carriage, which is vertically slidably connected to the vertical guide rail(s);
an outer frame, one side thereof facing the workbench being provided with a longitudinal guide rail(s), to which the inner frame is longitudinally slidably connected; and
a ram, which is transversely slidably provided on a ram base connected to the carriage, the swinging base being provided on the ram and being possible to swing relative to the ram.

6. The multi-function, large-scale gear milling machine according to claim 5, wherein the milling machine body is provided with a transverse guide rail(s), to which the outer frame is transversely slidably connected.

7. The multi-function, large-scale gear milling machine according to claim 2, wherein a swinging shaft of the fork-shaped cutter head is provided with a clamping mechanism.

8. The multi-function, large-scale gear milling machine according to claim 1, wherein the flat rotary table and the vertical rotary table are provided with a clamping mechanism, respectively.

9. The multi-function, large-scale gear milling machine according to any of claims 1 to 8, wherein the fork-shaped cutter head comprise two walls with different thicknesses, the disc-shaped milling cutter being disposed between the two walls; the wall with larger thickness contains a driving mechanism and a bearing supporting the cutting tool therein, and the wall with a smaller thickness only contains a bearing supporting a cutting tool therein.
